# EUROPÄISCHE PATENTSCHRIFT

(11) **EP 3 341 156 B1**
(45) Veröffentlichungstag und Bekanntmachung des Hinweises auf die Patenterteilung: **10.04.2024**
(21) Anmeldenummer: 16758154.5
(22) Anmeldetag: 29.08.2016
(51) Int. Cl.: B23P 15/10, F02F 3/18, F02B 23/06

(54) **KOLBEN EINER BRENNKRAFTMASCHINE MIT ALKALIMETALLKÜHLUNG UND VERFAHREN ZU SEINER HERSTELLUNG**
PISTON OF AN INTERNAL COMBUSTION ENGINE HAVING ALKALI METAL COOLING AND METHOD FOR PRODUCTION THEREOF
PISTON DE MOTEUR À COMBUSTION INTERNE À REFROIDISSEMENT PAR MÉTAL ALCALIN ET PROCÉDÉ DE FABRICATION

(30) Priorität: 27.08.2015 DE 102015216422
(43) Veröffentlichungstag der Anmeldung: 04.07.2018
(73) Patentinhaber: KS Kolbenschmidt GmbH, 74172 Neckarsulm (DE)
(72) Erfinder: WEISS, Eberhard, 74243 Langenbrettach (DE)
(74) Vertreter: Horn Kleimann Waitzhofer Schmid-Dreyer Patent- und Rechtsanwälte PartG mbB
(86) Internationale Anmeldenummer: PCT/EP2016/070323
(87) Internationale Veröffentlichungsnummer: WO 2017/032905

(56) Entgegenhaltungen:
- EP-A1- 0 086 284
- WO-A1-2014/012531
- DE-A1-102013 002 895
- JP-A- 2006 152 879
- US-A- 1 678 957
- US-A1- 2008 060 514
- US-A1- 2014 123 930

## Beschreibung

Die Erfindung betrifft einen Kolben und ein Verfahren zur Herstellung eines Kolbens einer Brennkraftmaschine, der verschließbare Hohlräume aufweist, in denen ein Kühlmedium, insbesondere ein Alkalimetall, insbesondere Natrium, eingebracht ist, gemäß den Merkmalen der Oberbegriffe der unabhängigen Patentansprüche.

Die DE 10 2013 002 895 A1 betrifft einen Kolben für eine Hubkolben-Verbrennungskraftmaschine mit einem Kolbenschaft, mit einem eine umlaufende Ringpartie aufweisenden Kolbenkopf, in welchem ein zumindest teilweise umlaufender Kühlkanal zum Aufnehmen eines Kühlmediums vorgesehen ist, und mit wenigsten einem sich teilweise im Kolbenschaft und teilweise im Kolbenkopf erstreckenden Kanalelement, wobei das wenigstens eine Kanalelement fluidisch vom Kühlkanal getrennt ist, wobei in dem Kanalelement ein zweites, vom ersten Kühlmedium unterschiedliches Kühlmedium zum zumindest bereichsweisen Kühlen des Kolbens aufgenommen ist. Um einen unerwünschten Austritt des flüssigen Natriums aus dem jeweiligen Kanalelement zu vermeiden, ist hier vorgeschlagen die jeweilige Öffnung mit einer Kugel zu verschließen. Dies ist sehr aufwendig und daher kostenintensiv. Weiterhin muss die Dichtigkeit jedes einzelnen Verschlusselements sichergestellt werden, um einen unerwünschten Austritt von Alkalimetall in den Brennraum der Brennkraftmaschine zu unterbinden.

Die Räume, in die das Alkalimetall eingebracht ist, sind als kanalförmige Elemente ausgebildet, die einen geraden Verlauf aufweisen und sich windschief zueinander erstrecken. Das bedeutet, dass die Achsen der Kanalelemente sich aufgrund der windschiefen Anordnung zueinander an keiner Stelle innerhalb des Kolbens treffen, so dass je Kanalelement auch ein eigenes Verschlusselement erforderlich ist, wodurch sich deren Montageaufwand erhöht.

Bisher hatten Kolben von der Schaftseite kommend mehrere Tieflochbohrungen, die sehr kompliziert gebohrt werden müssen (schräges Ansenken und Bohren). Jede Bohrung wurde aufwändig einzeln verschlossen. Der Verschluss wurde als Passung ausgeführt und aufgrund der Forderung gasdicht zu sein, mit einer Schweißung verschlossen. Derartige Bohrungen wurden aufgrund der Komplexität häufig manuell erstellt.

Die US 1,678,957 A beschreibt einen Kolben mit einer Wärmeübertragungskammer in der Nähe seiner Kopfwand, wobei die Wärmeübertragungskammer einen größeren Durchmesser als ihre axiale Länge aufweist und ein bewegliches Wärmeträgermedium enthält, das in der Wärmeübertragungskammer hin- und hergeschleudert werden kann, wobei eine Innenwand der Wärmeübertragungskammer eine unperforierte Oberfläche aufweist und eine Hauptöffnung der Wärmeübertragungskammer zur Richtung einer Kolbenbewegung geneigt ist, um die Bewegung des Wärmeträgermediums zu steuern. Die US 1,678,957 offenbart ein Verfahren zur Herstellung eines Kolbens nach dem Oberbegriff des Anspruchs 1 und einen Kolben mit den Merkmalen des Oberbegriffs des Anspruchs 6.

Der Erfindung liegt die Aufgabe zugrunde, einen gattungsgemäßen Kolben und ein Verfahren zur Herstellung eines solchen Kolbens zu verbessern.

Die Aufgabe wird durch die Merkmale der unabhängigen Ansprüche gelöst. Vorteilhafte Ausführungsbeispiele sind Gegenstand der abhängigen Ansprüche.

Hinsichtlich des Verfahrens zur Herstellung eines Kolbens ist die Aufgabe dadurch gelöst, dass von einer zentralen Stelle des Kolbens aus wenigstens zwei Hohlräume in den Kolben eingebracht werden und die Hohlräume nach dem Einfüllen des Kühlmediums im Bereich der zentralen Stelle verschlossen werden. Hierdurch ist der Vorteil gegeben, dass von einer zentralen Stelle aus mehrere Hohlräume, beispielsweise zwei, drei oder mehr als drei Hohlräume, in den Kolben, insbesondere in das Vollmaterial des Kolbens, eingebracht werden. Es ist nicht erforderlich, an verschiedenen Stellen des Kolbens anzusetzen, um diese Hohlräume einzubringen, beispielsweise durch einen Bohrvorgang. Außerdem ist der wesentliche Vorteil gegeben, dass nach dem Einbringen der Hohlräume und dem Einfüllen des Kühlmediums nur ein einziger Verschlussvorgang erfolgen muss. Es ist damit nicht erforderlich, für jeden einzelnen Hohlraum einen Verschlussvorgang vorzusehen, nachdem dieser mit Kühlmedium gefüllt worden ist. Auch für den Befüllvorgang ergeben sich Vorteile, da dieser von der zentralen Stelle aus beispielsweise gleichzeitig für alle von dort aus eingebrachten Hohlräume erfolgen kann. Das bedeutet, dass nach dem Einbringen der Hohlräume in den Kolben in einem Vorgang das Befüllen dieser Hohlräume und in einem weiteren einzigen Vorgang das Verschließen dieser zentralen Stelle erfolgen kann.

Vorzugsweise werden die Hohlräume durch einen Bohr- oder Fräsvorgang in den Kolben eingebracht. In diesem Fall sind sie als längliche zylinderförmige Hohlräume ausgestaltet. Es ist auch denkbar, die Hohlräume schon mit Herstellung des Kolbens, z.B. bei Anwendung eines Gießvorganges, in einen Kolbenrohling miteinzubringen.

In diesem Fall können die mit der Herstellung des Kolbens schon eingebrachten Hohlräume ebenfalls länglich (wiederum z.B. zylinderförmig), ausgebildet sein. Sie können aber auch eine andere Form, z.B. eine gekrümmte Form in ihrem Verlauf, aufweisen was sich durch entsprechende Formgebung eines ausspülbaren Kernes für die Herstellung eines solchen Hohlraumes im Gießverfahren realisieren lässt. In einem solchen Fall lassen sich die Lage und Anordnung der Hohlräume sehr gut an die geometrischen Gegebenheiten des Kolbens anpassen.

In besonders vorteilhafter Weise werden die Hohlräume, wie schon aus dem Stand der Technik bekannt, mit einem Alkalimetall, insbesondere Natrium, gefüllt. Dies kann nach der Erfindung in besonders vorteilhafter Weise von der zentralen Stelle aus gleichzeitig für alle eingebrachten Hohlräume erfolgen. Es ist auch denkbar, dass das Kühlmedium nicht direkt in die eingebrachten Hohlräume eingefüllt wird, sondern dass das Kühlmedium in einem Behälter (z.B. einem Röhrchen) eingefüllt ist und dieser Behälter schon gasdicht gegenüber der äußeren Umgebung verschlossen ist. Nach der Herstellung eines solchen Behälters, wie z.B. dem Röhrchen mit eingefülltem Natrium, wird dieses Bauteil in einen jeweiligen Hohlraum von der zentralen Stelle aus eingesetzt. Nach dem Einsetzen dieser Behälter mit Kühlmedium in die vorhandenen Hohlräume können diese im Bereich der zentralen Stelle verschlossen werden. Wird hierfür ein separates Verschlusselement verwendet, kann dadurch auch die Lage der Behälter in den Hohlräumen festgelegt werden, so dass diese sich nicht mehr relativ zu dem Kolben bewegen können. Alternativ dazu kann auch daran gedacht werden, dass Verschließen, beispielsweise mit einem Verschlusselement, so auszuführen, dass den in den Hohlräumen sich befindenden Behältern eine gewisse Hin- und Herbewegung im Kolben gestattet ist.

Bezüglich des Verschließens gibt es mehrere Möglichkeiten. Entweder wird im Bereich der zentralen Stelle ein separat gefertigtes Verschlusselement festgelegt, vorzugsweise unlösbar mit dem Kolben, weiter vorzugsweise im Bereich der Brennraummulde, weiter vorzugsweise rotationssymmetrisch zu einer Kolbenhubachse, unlösbar festgelegt. Es ist aber auch denkbar, den Verschluss unter zur Hilfenahme von Kolbenmaterial zu realisieren, insbesondere mittels Verlöten, Verschweißen oder Verkleben oder gleichen auszuführen.

Weiterhin ist erfindungsgemäß vorgesehen, dass die zentrale Stelle in dem Bereich einer späteren Brennraummulde ausgeführt wird. Die zentrale Bohrung kann dann beispielsweise in einer mittleren Erhebung der späteren Brennraummulde platziert werden. Diese mittlere Erhebung kann aus einem Verschlusselement für die zentrale Bohrung herausgearbeitet werden.

Weiterhin ist vorzugsweise vorgesehen, dass die mehreren Hohlräume dergestalt in den Kolben eingebracht werden, dass die Achsen der mehreren Hohlräume sich in einem zentralen Bereich in einem gemeinsamen Punkt schneiden. Hierdurch ist sichergestellt, dass die mehreren Hohlräume die gleiche Neigung aufweisen. Geneigt sind die mehreren Hohlräume in Bezug auf eine Kolbenhubachse des Kolbens. Der gemeinsame Punkt der sich treffenden Achsen der Hohlräume kann beispielsweise auf der Kolbenhubachse liegen. Die Neigung der Achsen der Hohlräume erfolgt bevorzugt in Bezug auf die Kolbenhubachse in Richtung des Kolbenschaftes. Eine Neigung der Achsen der Hohlräume in Bezug auf die Kolbenhubachse in Richtung eines Ringfeldes des Kolbens ist ebenfalls denkbar.

Weiterhin ist erfindungsgemäß vorgesehen, dass die zentrale Bohrung mit einem eine korrespondierende Geometrie aufweisenden Verschlusselement verschlossen wird. Hierdurch wird sichergestellt, dass die von der zentralen Bohrung ausgehenden Hohlräume sicher gasdicht verschlossen werden. Außerdem ist der Vorteil gegeben, dass das separat von dem Kolben hergestellte Verschlusselement genau an die Geometrie der zentralen Stelle angepasst werden kann, wodurch der Verschlussvorgang erleichtert wird. Durch die korrespondierende Geometrie des Verschlusselementes mit der Geometrie der zentralen Stelle lässt sich das separate Verschlusselement sehr einfach nicht nur im Bereich der zentralen Stelle einsetzen, sondern auch unlösbar fügen, z.B. mittels Verschweißen, Verlöten, Verkleben oder dergleichen. Dieses unlösbare zusammenfügen von Kolben und separatem Verschlusselement hat gerade dann den Vorteil, wenn sich die zentrale Stelle im Bereich der Brennraummulde befindet, die nach dem Zusammenfügen noch durch ein Fertigbearbeiten, beispielsweise einem spanabhebenden Vorgang, überarbeitet wird.

Weiterhin ist vorzugsweise vorgesehen, dass sowohl die zentrale Bohrung als auch das Verschlusselement eine Mantelfläche eines Kegelstumpfes aufweisen.

Die Gestaltung als Mantelfläche eines Kegelstumpfes bietet sich besonders an, da sie sich trichterförmig aufweitet und damit das Einbringen des mindestens einen Hohlraums zur Aufnahme eines Kühlmediums ermöglicht. Die Grundfläche des Kegelstumpfes kann hierbei sowohl in Richtung der späteren Brennraummulde als auch in Richtung der Kolbenbolzenbohrungen orientiert sein, abhängig von der für die Hohlräume vorgesehenen Neigung. Soll die Neigung der Hohlräume in Richtung des Schaftes bzw. der Kolbenbolzenbohrungen ausgeführt werden, wird die Grundfläche des Kegelstumpfes in Richtung des Kolbenbodens orientiert. Das Verschlusselement wird aus Richtung des Kolbenbodens zugeführt. Soll die Neigung der Hohlräume hingegen in Richtung des Ringfeldes bzw. des optionalen Kühlkanals ausgeführt werden, wird die Grundfläche des gedachten Kegelstumpfes in Richtung der Kolbenbolzenbohrungen orientiert. In diesem Fall wird das Verschlusselement aus der Richtung der Kolbenbolzenbohrungen zugeführt.

Weiterhin ist vorzugsweise vorgesehen, dass die zentrale Bohrung kraftform- und/oder stoffschlüssig mit dem Verschlusselement verschlossen wird, insbesondere durch ein Reibschweißverfahren. Die Wahl des Verfahrens zum Fügen des Verschlusselements ist abhängig von seiner geometrischen Gestalt. Sofern das Verschlusselement sowie die korrespondierende zentrale Bohrung rotationsymmetrisch ausgeführt ist, bietet sich Reibschweißen zur Herstellung einer stoffschlüssigen Verbindung an. Am oberen Teil des Verschlusselements sind Handhabungsflächen vorgesehen, diese dienen beim Reibschweißverfahren zur Übertragung des Drehmoments auf das Verschlusselement. Nach der Durchführung des Reibschweißverfahrens können diese Handhabungsflächen sowie evtl. entstandene Reibschweißwülste entfernt werden, beispielsweise zur Schaffung einer Brennraummulde. Es darf jedoch höchstens so viel Material abgetragen werden, dass der gasdichte Verschluss des mindestens einen Hohlraums gewährleistet ist. Es ist sicherzustellen, dass kein Alkalimetall aus dem mindestens einen Hohlraum austritt.

Hinsichtlich des Kolbens wird die Aufgabe der Erfindung dadurch gelöst, dass sich von einer zentralen Stelle des Kolbens aus wenigstens zwei Hohlräume in den Kolben erstrecken und die Hohlräume nach dem Einfüllen des Kühlmediums im Bereich der zentralen Stelle verschlossen sind. Es ist erfindungsgemäß vorgesehen, dass die zentrale Stelle in dem Bereich einer späteren Brennraummulde ausgeführt wird.

Hierdurch ergeben sich die gleichen Vorteile, wie sie weiter vorstehend schon in Bezug auf das Herstellungsverfahren beschrieben worden sind. Insbesondere sind die Vorteile gegeben, dass nur von einer Stelle aus die mehreren Hohlräume in den Kolben eingebracht werden müssen. Außerdem kann von dieser zentralen Stelle aus auch das Befüllen der Hohlräume mit dem Kühlmedium direkt oder unter zur Hilfenahme eines Behältnisses erfolgen. Außerdem ist, wie schon beschrieben, der wesentliche Vorteil gegeben, dass nach dem Befüllen der Hohlräume mit dem Kühlmedium in einem einzigen Verfahrensschritt die mehreren Hohlräume gasdicht verschlossen werden können. Der Verschluss erfolgt, wie ebenfalls schon beschrieben, durch ein separates Verschlusselement oder durch Verlöten, Verschweißen, Auffüllen mit weiterem Material oder dergleichen der zentralen Stelle.

Hierbei kann die Neigung des mindestens einen Hohlraums in Bezug auf die Kolbenhubachse des Kolbens entweder in Richtung des Kolbenschaftes bzw. der Kolbenbolzenbohrungen oder in Richtung des Ringfeldes bzw. des optionalen radial umlaufenden Kühlkanals erfolgen. In beiden Fällen wird über das in dem mindestens einen Hohlraum vorhandene Kühlmedium Verbrennungswärme aus dem zentralen Bereich des Kolbenbodens abgeführt. Bevorzugt wird Wärme aus dem Bereich der Brennraummulde über das Kühlmedium in dem mindestens einen Hohlraum abgeführt.

Weiterhin ist vorzugsweise vorgesehen, dass der mindestens eine Hohlraum eine Außenfläche eines Kolbenschaftes des Kolbens nicht durchtritt. Hierdurch wird die besonders beanspruchte Außenfläche des Kolbenschaftes frei von mechanischen oder elektrochemischen Beschädigungen gehalten. Die Außenfläche des Kolbenschaftes bleibt als gleichmäßige Fläche erhalten.

Weiterhin ist vorzugsweise vorgesehen, dass mindestens zwei Hohlräume vorgesehen sind und dass die Achsen der mindestens zwei Hohlräume sich in einem zentralen Bereich in einem gemeinsamen Punkt schneiden. Hierdurch liegen die Achsen der mindestens zwei Hohlräume auf der Mantelfläche eines gedachten Kegels. Die Achsen der Hohlräume und somit auch die Hohlräume weisen eine identische Neigung auf. Das Kühlmedium kann sich in dem gleichen geneigten Bereich in Bezug auf die Kolbenhubachse bewegen.

Weiterhin ist erfindungsgemäß vorgesehen, dass die zentrale Bohrung durch ein Verschlusselement mit korrespondierender Geometrie verschlossen ist. Hierdurch wird ein fester Sitz des Verschlusselementes in der zentralen Bohrung erreicht. Das Verschlusselement ist bevorzugt spielfrei in Bezug auf die zentrale Bohrung ausgeführt.

Mit anderen Worten wird die eingangs gestellte Aufgabe dadurch gelöst, dass in einem Bereich des Kolbens ein Zentralbereich geschaffen wird und von diesem Zentralbereich ausgehend zwei oder mehrere länglich sich erstreckende Öffnungen in den Kolbengrundkörper eingebracht werden. Nach dem Einbringen dieser Öffnungen werden Räume geschaffen, die mit einem Kühlmedium, insbesondere einem Alkalimetall, weiter insbesondere Natrium, gefüllt werden. Anschließend erfolgt der Verschluss des Zentralbereiches, von dem aus sich die Öffnungen erstrecken, durch ein gemeinsames, das heißt alle Öffnungen verschließendes Verschlusselement. Das Verschlusselement wird mit einem geeigneten Verfahren, wie zum Beispiel Verschweißen, Verlöten, Verkleben, Verklemmen, Verclipsen, insbesondere Reibschweißen, unlösbar mit dem Kolbengrundkörper verbunden.

Die Achsen der sich länglich erstreckenden Aufnahmeräume für das Kühlmedium schneiden sich in einem gemeinsamen zentralen Punkt, der sich im Zentralbereich, von dem aus die Öffnungen ausgehen, befindet. Dies hat den Vorteil, dass die Öffnungen nicht nur gemeinsam mit dem Kühlmedium gefüllt werden können, sondern dass auch der Verschluss der einzelnen Öffnungen gemeinsam durch ein einziges Verschlusselement erfolgt. Das Verschlusselement kann, muss aber nicht ein Bestandteil des fertigen Kolbens sein. Vorzugsweise ist das Verschlusselement Teil der Brennraummulde eines Kolbens, insbesondere der mittigen höckerartigen Erhebung des Brennraummuldengrundes.

Mit anderen Worten wird ein gemeinsamer Verschluss mehrerer gebohrter Kühlräume an einem Brennkraftmaschinenkolben vorgeschlagen. Hierdurch wird ein zentrales Verschließen von Kühlbohrungen, die mit einem zusätzlichen Medium die Wärme aus dem Verbrennungsbereich in einen kühleren Bereich des Kolbens bewegen.

Die Erfindung zeichnet sich dadurch aus, dass die Bohrungen nicht wie aus dem Stand der Technik bekannt, vom Schaft aus gebohrt werden, sondern über eine zentrale in der Mitte des Kolbenbodens geschaffene Fläche gebohrt werden. Durch diese Umkehrung der Bearbeitungsrichtung ist es möglich, eine sehr genaue Positionierung der Bohrung durchzuführen. Ebenso entfällt ein aufwändiges schräges Ansenken und Bohren von der Schaftseite. So ist eine wirtschaftliche und kostengünstige Industrialisierung für diese Bohrung umzusetzen.

Hierdurch sind keine mehrfache Bearbeitung und kein mehrfacher Verschluss der einzelnen Bohrungen erforderlich. Weiterhin wird auf eine aufwändige, schräge Vorbearbeitung verzichtet. Stattdessen erfolgt eine genaue Positionierung der Bohrungen, da der Bohrungsbeginn an der Stelle ist, an der die Bohrung sehr exakt sein muss. Die Bohrung erfolgt in eine zuvor bearbeitete Fläche, die rechtwinklig zur Bohrachse ausgerichtet ist. Der zentrale Verschluss von mehreren Bohrungen erfolgt gleichzeitig über ein Fügeverfahren.

Die Erfindung zeichnet sich dadurch aus, dass durch einen zentralen Verschluss in der Kolbenmitte, mehrere Bohrungen geschlossen werden können. Durch die Umkehrung der Bearbeitungsrichtung ist eine genaue Positionierung der Bohrung und somit eine optimale Kühlwirkung möglich. Durch die rechtwinklig zur Bohrachse ausgerichtete bearbeitete Fläche, ist es möglich eine kostengünstige Bearbeitung durchzuführen. Da bei der Erfindung mehrere Bohrungen gleichzeitig durch ein Fügeverfahren verschlossen werden, ist eine mehrfache Prüfung auf Dichtigkeit bzw. ein aufwendiges Verdrehen des Bauteils nicht nötig. Der zentrale Verschluss kann mit allen zur Zeit bekannten technisch umsetzbaren Fügeverfahren, beispielsweise Löten, Kleben, Reibschweißen, Schweißen oder dergleichen gefügt werden.

Durch die Umkehr der Bearbeitungsrichtung ist ein zentraler Verschluss aller Bohrungen erst möglich.

Der untere Abschnitt des Verschlusselements kann beispielsweise als Kegel oder Kegelstumpf ausgeführt sein.

Auch weitere geometrische Ausgestaltungen sind für das Verschlusselement denkbar, Voraussetzung ist jedoch, dass sie im Überdeckungsbereich korrespondierend mit der Fläche der zentralen Bohrung ausgeführt sind.

Die freien Endbereiche der Kühlräume treffen sich im Bereich der zentralen Stelle, die auch als zentrale Bohrung (wenn sie durch einen Bohrvorgang in den Kolben eingebracht wird) oder als zentrale Öffnung (wenn sie zum Beispiel durch einen Fräsvorgang oder anderweitig in den Kolben eingebracht wird) bezeichnet werden kann.

Das Kühlmedium ist bevorzugt ein Alkalimetall. Es kommen aber auch andere geeignete Kühlmedien neben den Alkalimetallen in Betracht.

Die grundlegende Idee wird im Folgenden anhand der Figuren erläutert. Weitere Einzelheiten der Erfindung werden in den Figuren anhand von einem schematisch dargestellten Ausführungsbeispiel beschrieben.

### Hierbei zeigt:

- Fig. 1: zeigt eine Unteransicht eines Kolbens mit einer Tieflochbohrung zur Aufnahme von Alkalimetall aus dem Stand der Technik,
- Fig. 2: zeigt eine Schnittansicht eines Kolbens mit einer gemäß dem Stand der Technik verschlossene Tieflochbohrung zur Aufnahme von Alkalimetall,
- Fig. 3A bis 3C: zeigen die Abfolge zum Einbringen des erfindungsgemäßen Hohlraums für Alkalimetall in einen Kolben,
- Fig. 4A u. 4B: zeigen das Erstellen eines erfindungsgemäßen Verschlusses für den Hohlraum zur Aufnahme von Alkalimetallen und
- Fig. 5: zeigt einen Ausschnitt des Kolbens mit einem verschlossenen Hohlraum für Alkalimetalle.

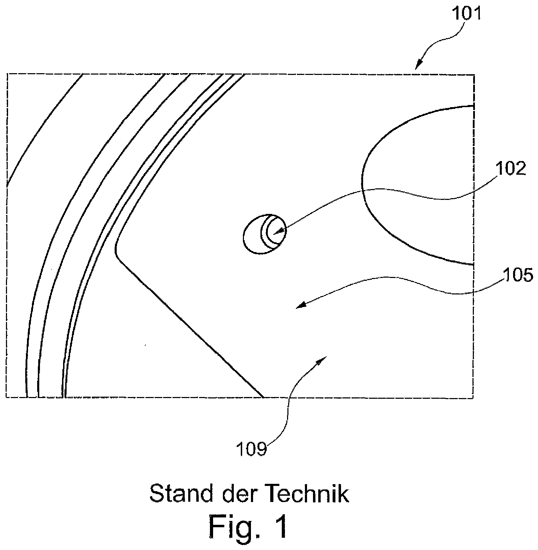

Die Figur 1 zeigt eine Unteransicht eines Kolbens 101 mit einer Tieflochbohrung 102 zur Aufnahme von Alkalimetall aus dem Stand der Technik. Jede einzelne Tieflochbohrung 102 muss angesenkt und tiefgebohrt werden (bei jeder einzelnen Bohrung durchzuführen). Dargestellt ist eine in zwei Richtungen gedrehte Bohrung 102 im Bereich der Schmiedehaut 105 eines Schafts 109.

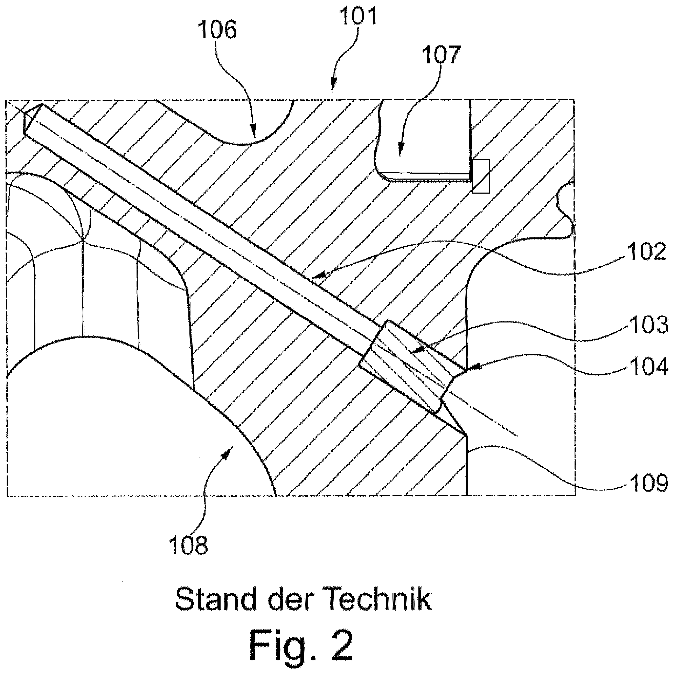

Die Figur 2 zeigt eine gemäß dem Stand der Technik verschlossene Tieflochbohrung 102 zur Aufnahme von Alkalimetall. Die Tieflochbohrung 102 in einem Kolben 101 aus dem Stand der Technik ist mit einem Verschlussstopfen 103 verschlossen, welcher durch eine Schweißung 104 festgelegt ist. Weiterhin weist der Kolben 101 eine Brennraumulde 106 sowie einen Kühlkanal 107 und eine Bolzenbohrung 108 auf. Die Tieflochbohrung 102 steht nicht in Verbindung mit dem Kühlkanal 107. Die Tiefenbohrung wird aus der Richtung des Schafts 109 in den Kolben 101 eingebracht.

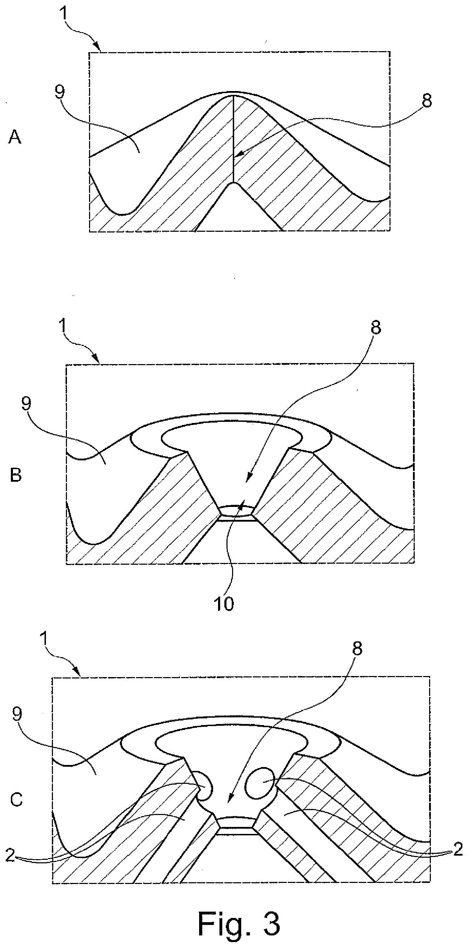

Die Figuren 3A bis 3C zeigen die Abfolge zum Einbringen eines erfindungsgemäßen Hohlraums 2 zur Aufnahme von Alkalimetallen in einen Kolben 1.

Die Figur 3A zeigt das vorbearbeitete Rohteil im Anlieferzustand.

Die Figur 3B zeigt eine vorbearbeitete zentrale Stelle 10 (insbesondere gebohrt oder gefräst). Diese zentrale Stelle 10 wird in einen Zentralbereich 8 (den die Kolbenhubachse durchtritt) des Kolbens 1 eingebracht. Der Zentralbereich 8 liegt innerhalb einer späteren Brennraummulde 5. Die zentrale Stelle 10 kann beispielsweise die Gestalt eines Kegelstumpfes aufweisen, wobei andere geometrische Formen jedoch ebenfalls denkbar sind. Die die zentrale Stelle 10 begrenzende, rotationsymmetrische Fläche ist hier als Mantelfläche eines Kegelstumpfes ausgeführt.

Die Figur 3C zeigt zur vorbearbeiteten Stelle 10 rechtwinklig eingebrachte Kühlbohrungen zur Bildung eines Hohlraums 2, welcher zur Aufnahme von Alkalimetall dient. Er bildet ein Reservoir für Alkalimetall aus.

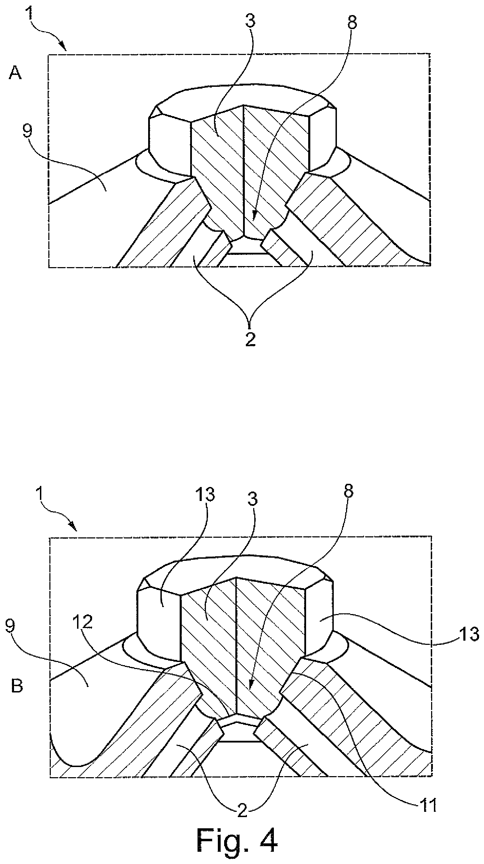

Die Figuren 4A und 4B zeigen das Erstellen eines erfindungsgemäßen Verschlusses des Hohlraums 2 für Alkalimetalle. Der Verschluss des mindestens einen Hohlraums 2 erfolgt durch ein Verschlusselement 3. Dieses Verschlusselement 3 kann als Kegelstumpf ausgeführt sein. Wichtig ist, dass das Verschlusselement 3 eine korrespondierende Geometrie zu der zentralen Stelle 10 aufweist. Von Vorteil ist es, wenn sowohl die zentrale Stelle 10 als auch das Verschlusselement 3 eine rotationssymmetrische Gestalt aufweisen, da dies das Fügen erheblich vereinfacht. Als stoffschlüssiges Fügeverfahren, kann beispielsweise ein Reibschweißverfahren vorgesehen werden. Das Verschlusselement 3 wird stoff- und/oder kraft- und/oder formschlüssig am Kolben festgelegt. Die Festlegung des Verschlusselements 3 erfolgt bevorzugt im Bereich der zentralen Stelle 10. Eine Mantelfläche 11 im unteren Bereich des Verschlusselements 3 fügt sich formschlüssig in die Mantelfläche der zentralen Stelle 10 ein. Von der Brennraummulde 5 abgewandt schließt sich eine Deckfläche 12 des kegelstumpfförmigen Abschnitts des Verschlusselements 3 an. Am der Deckfläche 12 gegenüberliegenden Ende des kegelstumpfförmigen Abschnitts des Verschlusselements 3 befindet sich dessen Grundfläche. An diese Grundfläche schließt sich der obere Bereich des Verschlusselements 3 an, welcher an seinem Umfang mehrere Handhabungsflächen 13 aufweist. Diese Handhabungsflächen 13 dienen zur sicheren Aufnahme des Verschlusselements 3 in Werkzeuge. Wenn beispielsweise ein Reibschweißverfahren eingesetzt wird, um das Verschlusselement 3 unlösbar in der zentralen Stelle 10 festzulegen, kann über die Handhabungsflächen 13 das erforderliche Drehmoment übertragen werden. Bei der späteren Fertigstellung des Kolbens 1 können diese Handhabungsflächen 13 entfernt werden. Bevorzugt sind am Umfang des oberen Bereichs des Verschlusselements 3 sechs Handhabungsflächen 13 gleichmäßig verteilt. In diesem Fall kann ein Sechskant-Antrieb zur Betätigung des Verschlusselements 3 zum Einsatz kommen. Jedoch ist es auch denkbar, weniger Handhabungsflächen 13 am Verschlusselement 3 vorzusehen, beispielsweise drei oder vier oder mehr Handhabungsflächen 13 am Verschlusselement 3 vorzusehen, beispielsweise acht.

In der Figur 4A ist das Fügen des zentralen Verschlusselements 3 durch Reibschweißen gezeigt. Eine mögliche Reibschweißwulst wird am Umfang des kegelstumpfförmigen Abschnitts des Verschlusselements 3 im Bereich seiner Grundfläche und/oder seiner Deckfläche ausgebildet. Im Bereich der Grundfläche des kegelstumpfförmigen Abschnitts kann die Reibschweißwulst bei der Fertigstellung der Brennraummulde 5 entfernt werden, beispielsweise durch spanabhebende Verfahren. Im gleichen Verfahrensschritt kann auch der obere Bereich des Verschlusselements 3 mit den Handhabungsflächen 13 in seiner geometrischen Gestalt verändert oder ganz entfernt werden.

Die Figur 4B wiederum zeigt das Fügen des zentralen Verschlusselements 3 durch Löten, Kleben, Schweißen oder dergleichen. Es ist auch denkbar, ein Gewinde zwischen dem Verschlusselement 3 und der zentralen Stelle 10 auszuführen. In diesem Fall werden Gewindegänge in die Mantelfläche 11 des Verschlusselements 3 sowie in die Mantelfläche der zentralen Stelle 10 eingearbeitet. Die Handhabungsflächen im oberen Bereich des Verschlusselements 3 dienen dann zur Betätigung dieser Schraubverbindung.

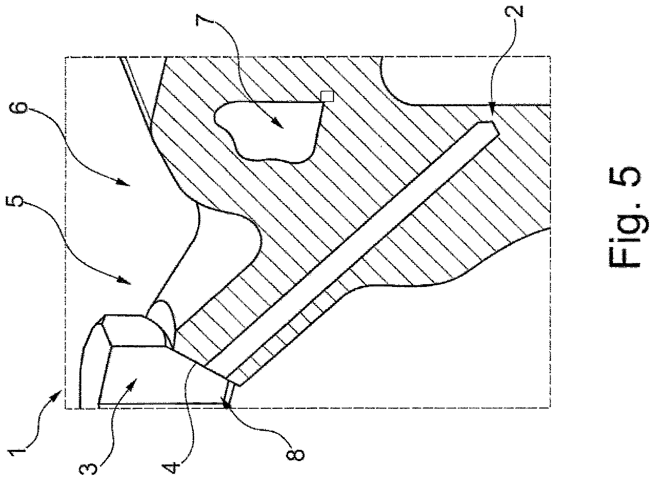

In der Figur 5 ist ein Ausschnitt des Kolbens 1 mit einem verschlossenen Hohlraum 2 für Alkalimetalle gezeigt. Durch den zentralen Verschluss mit dem Verschlusselement 3, entfällt das mehrfache aufwändige Verschließen einzelner Tieflochbohrungen. Im Bereich der Brennraummulde 6 ist eine Schmiedehaut 5 ausgebildet, welche jedoch zur Herstellung des mindestens einen Hohlraums 2 nicht durchdrungen werden muss. Weiterhin ist ein radial umlaufender Kühlkanal 7 dargestellt. Dieser Kühlkanal 7 nimmt ein anderes Kühlmedium auf, als es in dem mindestens einem Hohlraum 2 Verwendung findet. Durch die räumliche Trennung ist gewährleistet, dass keine Durchmischung der mindestens zwei Kühlmedien (insbesondere Öl und Natrium) stattfindet.

Der mindestens eine Hohlraum 2 wird durch eine Bohrung in eine bearbeitete, rechtwinklig zur Bohrachse definierte Fläche (keine separate Anspiegelung erforderlich) erzeugt. Es entfällt die aufwändige Vorbereitung für Tieflochbohrungen. Weiterhin ist kein Bohren durch eine geschmiedete Rohkontur erforderlich.

### BEZUGSZEICH ENLISTE

- 1: Kolben
- 2: Hohlraum
- 3: Verschlusselement
- 4: Schweißung
- 5: Schmiedehaut
- 6: Brennraummulde
- 7: Kühlkanal
- 8: Zentralbereich
- 9: Kolbengrundkörper
- 10: Zentrale Stelle
- 11: Mantelfläche
- 12: Deckfläche
- 13: Handhabungsfläche

- 101: Kolben aus dem Stand der Technik
- 102: Tieflochbohrung
- 103: Verschlussstopfen
- 104: Schweißung
- 105: Schmiedehaut
- 106: Brennraummulde
- 107: Kühlkanal
- 108: Bolzenbohrung
- 109: Schaft

## Patentansprüche

1. Verfahren zur Herstellung eines Kolbens (1) einer Brennkraftmaschine, wobei in dem Kolben (1) mindestens ein Hohlraum (2) geschaffen wird, der mit einem Kühlmedium gefüllt und anschließend verschlossen wird, wobei von einer zentralen Stelle (10) des Kolbens (1) aus wenigstens zwei Hohlräume (2) in den Kolben (1) eingebracht wurden und die Hohlräume (2) nach dem Einfüllen des Kühlmediums im Bereich der zentralen Stelle (10) verschlossen werden, **dadurch gekennzeichnet, dass** die zentrale Stelle (10) in dem Bereich einer späteren Brennraummulde (5) ausgeführt wird, wobei die zentrale Stelle (10) mit einem eine korrespondierende Geometrie aufweisenden Verschlusselement (3) verschlossen wird.

2. Verfahren nach Patentanspruch 1, **dadurch gekennzeichnet, dass** die zentrale Stelle (10) als Bohrung oder Fräsung ausgeführt wird.

3. Verfahren nach einem der vorhergehenden Patentansprüche, **dadurch gekennzeichnet, dass** die mehreren Hohlräume (2) dergestalt in den Kolben (1) eingebracht werden, dass die Achsen der mehreren Hohlräume (2) sich in einem zentralen Bereich in einem gemeinsamen Punkt schneiden.

4. Verfahren nach einem der vorhergehenden Patentansprüche, **dadurch gekennzeichnet, dass** sowohl die zentrale Bohrung (10) als auch das Verschlusselement (3) eine Mantelfläche eines Kegelstumpfes aufweisen.

5. Verfahren nach einem der vorhergehenden Patentansprüche, **dadurch gekennzeichnet, dass** die zentrale Bohrung (10) kraft- form- und/oder stoffschlüssig mit dem Verschlusselement (3) verschlossen wird, insbesondere durch ein Reibschweißverfahren.

6. Kolben (1) einer Brennkraftmaschine, wobei der Kolben (1) mindestens einen geschlossenen Hohlraum (2) aufweist, der mit einem Kühlmedium gefüllt ist, wobei sich von einer zentralen Stelle (10) des Kolbens (1) aus wenigstens zwei Hohlräume (2) in den Kolben (1) erstrecken und die Hohlräume (2) nach dem Einfüllen des Kühlmediums im Bereich der zentralen Stelle (10) verschlossen sind, **dadurch gekennzeichnet, dass** die zentrale Stelle (10) in dem Bereich einer späteren Brennraummulde (5) ausgeführt ist, wobei die zentrale Bohrung (10) durch ein Verschlusselement (3) mit korrespondierender Geometrie verschlossen ist.

7. Kolben nach Patentanspruch 6, **dadurch gekennzeichnet, dass** der mindestens eine Hohlraum (2) eine Außenfläche eines Kolbenschaftes des Kolbens (1) nicht durchtritt.

8. Kolben (1) nach einem der Patentansprüche 6 oder 7, **dadurch gekennzeichnet, dass** mindestens zwei Hohlräume (2) vorgesehen sind und dass die Achsen der mindestens zwei Hohlräume (2) sich in einem zentralen Bereich in einem gemeinsamen Punkt schneiden.

## Claims

1. Method for producing a piston (1) of an internal combustion engine, wherein at least one cavity (2) is created within the piston (1), which cavity is filled with a cooling medium and subsequently closed, wherein at least two cavities (2) are introduced into the piston (1) from a central point (10) of the piston (1) and the cavities (2) are closed in the region of the central point (10) after the cooling medium has been filled in, **characterized in that** the central point (10) is formed in the region of a later combustion chamber cavity (5), wherein the central point (10) is closed with a closure element (3) comprising a corresponding geometry.

2. Method according to claim 1, **characterized in that** the central point (10) is designed as a bore or milling.

3. Method according to one of the preceding claims, **characterized in that** the plurality of cavities (2) are introduced into the piston (1) in such a way that the axes of the plurality of cavities (2) intersect at a common point in a central region.

4. Method according to one of the preceding claims, **characterized in that** both the central bore (10) and the closure element (3) comprise a lateral surface of a truncated cone.

5. Method according to one of the preceding patent claims, **characterized in that** the central bore (10) is closed with the closure element (3) in a form-fitting and/or material-fitting manner, in particular by a friction welding process.

6. Piston (1) of an internal combustion engine, wherein the piston (1) comprises at least one closed cavity (2) which is filled with a cooling medium, wherein at least two cavities (2) extend from a central point (10) of the piston (1) into the piston (1) and the cavities (2) are closed in the region of the central point (10) after the cooling medium has been filled in, **characterized in that** the central point (10) is formed in the region of a later combustion chamber cavity (5), wherein the central bore (10) is closed by a closing element (3) with a corresponding geometry.

7. Piston according to claim 6, **characterized in that** the at least one cavity (2) does not pass through an outer surface of a piston skirt of the piston (1).

8. Piston according to one of claims 6 or 7, **characterized in that** at least two cavities (2) are provided and that the axes of the at least two cavities (2) intersect at a common point in a central region.

## Revendications

1. Procédé pour produire un piston (1) d'un moteur à combustion interne, dans lequel au moins une cavité (2) est créée à l'intérieur du piston (1), laquelle cavité est remplie d'un milieu de refroidissement et est ultérieurement fermée, dans lequel au moins deux cavités (2) sont ménagées dans le piston (1) à partir d'un point central (10) du piston (1) et les cavités (2) sont fermées dans la région du point central (10) après le remplissage du milieu de refroidissement, **caractérisé en ce que** le point central (10) est formé dans la région d'une cavité de chambre de combustion suivante (5), dans lequel le point central (10) est fermé par un élément de fermeture (3) ayant une géométrie correspondante.

2. Procédé selon la revendication 1, **caractérisé en ce que** le point central (10) est désigné en tant qu'alésage ou fraisage.

3. Procédé selon l'une des revendications précédentes, **caractérisé en ce que** les cavités de la pluralité de cavités (2) sont ménagées dans le piston (1) d'une manière telle que les axes des cavités de la pluralité de cavités (2) se coupent au niveau d'un point commun dans une région centrale.

4. Procédé selon l'une des revendications précédentes, **caractérisé en ce que** l'alésage central (10) et l'élément de fermeture (3) comprennent tous les deux une surface latérale d'un cône tronqué.

5. Procédé selon l'une des revendications précédentes, **caractérisé en ce que** l'alésage central (10) est fermé par l'élément de fermeture (3) d'une manière à ajustement de forme et/ou à ajustement de matériau, en particulier par un processus de soudage par friction.

6. Piston (1) d'un moteur à combustion interne, dans lequel le piston (1) comprend au moins une cavité fermée (2) qui est remplie d'un milieu de refroidissement, dans lequel au moins deux cavités (2) s'étendent à partir d'un point central (10) du piston (1) dans le piston (1) et les cavités (2) sont fermées dans la région du point central (10) après le remplissage du milieu de refroidissement, **caractérisé en ce que** le point central (10) est formé dans la région d'une cavité de chambre de combustion suivante (5), dans lequel l'alésage central (10) est fermé par un élément de fermeture (3) ayant une géométrie correspondante.

7. Piston selon la revendication 6, **caractérisé en ce que** l'au moins une cavité (2) ne traverse pas la surface extérieure d'une chemise de piston du piston (1).

8. Piston selon l'une des revendications 6 ou 7, **caractérisé en ce qu'**au moins deux cavités (2) sont prévues et **en ce que** les axes des au moins deux cavités (2) se coupent au niveau d'un point commun dans une région centrale.
